# EUROPÄISCHE PATENTSCHRIFT

(11) **EP 4 464 957 B1**
(45) Veröffentlichungstag und Bekanntmachung des Hinweises auf die Patenterteilung: **05.08.2026**
(21) Anmeldenummer: 24174002.6
(22) Anmeldetag: 03.05.2024
(51) Int. Cl.: F25B 21/00, B60H 1/00, F25B 23/00, F25B 30/00

(54) **WÄRMEPUMPE**
HEAT PUMP
POMPE À CHALEUR

(30) Priorität: 16.05.2023 DE 102023204582
(43) Veröffentlichungstag der Anmeldung: 20.11.2024
(73) Patentinhaber: VOLKSWAGEN AG, 38440 Wolfsburg (DE)
(72) Erfinder: Olfe, Jürgen, 38543 Volkse (DE); Schneck, Christian, 38104 Braunschweig (DE)

(56) Entgegenhaltungen:
- WO-A1-01/63186
- DE-A1- 102019 203 889
- US-A1- 2015 369 524

## Beschreibung

Die Erfindung betrifft eine Wärmepumpe nach Anspruch 1, ein Verfahren zum Betreiben einer solchen Wärmepumpe nach Anspruch 8 und ein Kraftfahrzeug mit einer solchen Wärmepumpe nach Anspruch 10.

Die Erfindung betrifft eine Wärmepumpe, umfassend:
- eine Mehrzahl von Wärmespeichern, welche in einer Kaskade hintereinander geschaltet sind;
- eine Mehrzahl von kalorischen Speicherelementen, welche wechselnd in jeweils einem der Wärmespeicher positioniert sind; und
- mindestens ein Triebmittel zum Wechseln der Position der Speicherelemente zwischen den Wärmespeichern,

wobei mindestens einer der Wärmespeicher mit einer Komponente in Kontakt ist, um diese Komponente zu temperieren,
wobei ein letzter der Wärmespeicher in der Kaskade mit einer Umgebung im Wärmeaustausch steht.

Zur Effizienzsteigerung von Wärmepumpen, vor allem in Kraftfahrzeugen aber auch in stationären Anwendungen, können elasto-kalorische Wärmepumpen verwendet werden. In einer elasto-kalorischen Wärmepumpe wird der elasto-kalorische Effekt genutzt, wobei durch zyklische Deformation eines elasto-kalorischen Materials eine reversible Temperaturänderung hervorgerufen wird, welche für die Übertragung von Wärme von einem kälteren Kühlmittelstrom auf einen wärmeren Kühlmittelstrom genutzt werden kann. Derartige elasto-kalorische Wärmepumpen benötigen jedoch einen sehr großen Bauraum. Zudem ist die effiziente Führung des Kühlmittels schwierig. Alternativ oder zusätzlich ist ein thermo-elektrisches Material (beispielsweise bekannt als Peltier-Element oder TEC) einsetzbar, bei welchem eine Temperaturänderung aufgrund des Seebeck-Effekts zu einem Stromfluss führt. Alternativ oder zusätzlich ist ein elektro-kalorisches Material einsetzbar, bei welchem eine Temperaturänderung aufgrund des pyroelektrischen Effekts zu einer Spannungsänderung führt. Alternativ oder zusätzlich ist ein magneto-kalorisches Material einsetzbar, bei welchem eine Temperaturänderung die (Magnet-) Feldstärke infolge einer Spin-Gitter-Relaxation verändert. Allen diesen alternativ genannten Festkörper-Elementen ist gemein, dass eine externe Energiezufuhr oder Energieabfuhr eine Temperaturänderung bewirkt, wobei diese Energie zumindest mit geringem Umwandlungsaufwand, also beispielsweise magnetisch induzierter Spannung, elektrisch leitbar ist.

Das Dokument US 2015/369524 A1 wird als nächstliegender Stand der Technik gegenüber dem Gegenstand des Anspruchs 1 angesehen und offenbart eine Wärmepumpe mit einer Mehrzahl von Wärmespeichern und Speicherelementen gemäß dem Oberbegriff von Anspruch 1.

Aus der US 2015 0 369 524 A1 ist ein Kühl-/Heizmodul bekannt, welches zum Kühlen und Heizen von Luft ausgebildet ist. Das Kühl-/Heizmodul umfasst einen ersten und einen zweiten Kühl- /Heizabschnitt, welche jeweils ein thermoelastisches Material umfassen. Ferner ist ein Aktuator vorgesehen, der Spannung auf das thermoelastische Material ausübt. Ein Stellglied ist so konfiguriert, dass es abwechselnd den Vorgang des Aufbringens einer Spannung auf das thermoelastische Material des ersten Kühl-/Heizabschnitts und das Entfernen der Spannung vom thermoelastischen Material des zweiten Kühl-/Heizabschnitts und den Vorgang des Aufbringens einer Spannung auf das thermoelastische Material des zweiten Kühl-/Heizabschnitts und das Entfernen der Spannung vom thermoelastischen Material des ersten Kühl-/Heizabschnitts durchführt.

Aus der DE 10 2019 203 889 A1 ist eine Vorrichtung zum Wärmetausch bekannt, die einen steiferen äußeren Ring, einen flexiblen inneren Ring, elasto-kalorische Elemente, die radial zwischen dem äußeren Ring und dem inneren Ring gespannt sind, und ein rotierendes Formelement, das Einbuchtungen und/oder Ausbuchtungen aufweist, welche auf den inneren Ring wirken, umfasst.

Die WO 2001 0 063 186 A1 offenbart ein Wärmeübertragungsgerät, welches einen aktiven regenerativen Kreislauf umfasst. Das Wärmeübertragungsgerät verwendet ein aktives Fluid und ein Wärmeübertragungsfluid, welche physisch voneinander getrennt sind.

Der Erfindung liegt gegenüber vorbekannten Wärmepumpen die Aufgabe zugrunde, das folgende Problem mit möglichst einfachen und kostengünstigen Mitteln zu lösen:
Es soll eine Wärmepumpe, ein Verfahren zum Betreiben der Wärmepumpe und ein Kraftfahrzeug bereitgestellt werden, bei welchen ein vergrößerter Temperaturhub erzielbar ist.

Gemäß der vorliegenden Erfindung wird das oben genannte Ziel durch die Merkmale von Anspruch 1 und Anspruch 8 gelöst. Bevorzugte Ausführungsformen sind in den abhängigen Ansprüchen definiert.

Gemäß Anspruch 1 wird die obige Aufgabe gelöst, indem von mindestens einem der Wärmespeicher ein Zwischenspeicher zum Übertragen von Wärme zwischen einem Wärmespeicher in Kontakt mit einer zu temperierenden Komponente und dem letzten Wärmespeicher gebildet ist, wobei die kalorischen Speicherelemente mindestens, bevorzugt ausschließlich, eines der folgenden Materialien umfassen:
- ein thermo-elektrisches Material, umfassend bevorzugt Bismut, Tellur, und besonders bevorzugt Antimon;
- ein elektro-kalorisches Material, umfassend bevorzugt ein Ter-Polymer oder eine Blei-Keramik;
- ein elasto-kalorisches Material, umfassend bevorzugt Nickel und/oder Titan, besonders bevorzugt gebildet von einer Nickel-Titan-Legierung oder einer Nickel-Titan-Legierung mit zusätzlichen Legierungselementen wie Kupfer, Vanadium und Kobalt; und
- ein magneto-kalorisches Material, umfassend bevorzugt Gadolinium oder Lanthan.

Nach Anspruch 7 wird die obige Aufgabe gelöst, indem mit der hier beschriebenen Wärmepumpe die folgenden Schritte ausgeführt werden:
i. bei Abweichen einer Temperatur in dem ersten Wärmespeicher von einer Wunschtemperatur, Ausgleichen der Temperatur zwischen dem ersten Wärmespeicher und dem ersten kalorischen Speicherelement, indem das erste kalorische Speicherelement in dem ersten Wärmespeicher positioniert ist;
ii. mittels externem Energieaustausch zwischen dem ersten kalorischen Speicherelement und einer externen Energiequelle, Verändern der Temperatur des ersten kalorischen Speicherelements weg von der Wunschtemperatur derart, dass eine Temperaturdifferenz im Vergleich zu der Temperatur in dem zweiten Wärmespeicher vergrößert wird, und
   mittels des zugehörigen Triebmittels, Bewegen des ersten kalorischen Speicherelements von dem ersten Wärmespeicher in den zweiten Wärmespeicher;
iii. Ausgleichen der Temperatur zwischen dem zweiten Wärmespeicher und dem ersten kalorischen Speicherelement, indem das erste kalorische Speicherelement in wärmeleitendem Kontakt mit dem zweiten Wärmespeicher positioniert ist;
iv. mittels im Vergleich zu Schritt ii. umgekehrtem externem Energieaustausch zwischen dem ersten kalorischen Speicherelement und einer externen Energiequelle, Verändern der Temperatur des ersten kalorischen Speicherelements, und

mittels des zugehörigen Triebmittels, Bewegen des ersten kalorischen Speicherelements von dem zweiten Wärmespeicher in den ersten Wärmespeicher,
wobei zeitlich überschneidend, bevorzugt zeitgleich, Schritt i. bis Schritt iv. in gleicher Weise von dem mindestens einen weiteren kalorischen Speicherelement zwischen dem zweiten Wärmespeicher beziehungsweise dem weiteren Wärmespeicher und dem weiteren Wärmespeicher beziehungsweise dem letzten Wärmespeicher ausgeführt wird,
wobei die Schritte des Verfahrens wiederholt werden, bis in dem ersten Wärmespeicher die Wunschtemperatur erreicht ist.

Nach Anspruch 9 wird die obige Aufgabe gelöst, indem ein Kraftfahrzeug mit einer solchen Wärmepumpe und bevorzugt diese betrieben mit einem Verfahren, wie hierin beschrieben bereitgestellt wird.

Vorteilhafte Weiterbildungen der Erfindung sind in den Unteransprüchen gekennzeichnet.

Die Erfindung betrifft eine Wärmepumpe, umfassend:
- eine Mehrzahl von Wärmespeichern, welche in einer Kaskade hintereinander geschaltet sind;
- eine Mehrzahl von kalorischen Speicherelementen, welche wechselnd in jeweils einem der Wärmespeicher positioniert sind; und
- mindestens ein Triebmittel zum Wechseln der Position der Speicherelemente zwischen den Wärmespeichern,

wobei mindestens einer der Wärmespeicher mit einer Komponente in Kontakt ist, um diese Komponente zu temperieren,
wobei ein letzter der Wärmespeicher in der Kaskade mit einer Umgebung im Wärmeaustausch steht.

Gemäß Anspruch 1 wird diese Aufgabe gelöst, indem von mindestens einem der Wärmespeicher ein Zwischenspeicher zum Übertragen von Wärme zwischen einem Wärmespeicher in wärmeleitendem Kontakt mit einer zu temperierenden Komponente und dem letzten Wärmespeicher gebildet ist, wobei die kalorischen Speicherelemente mindestens, bevorzugt ausschließlich, eines der folgenden Materialien umfassen:
- ein thermo-elektrisches Material, umfassend bevorzugt Bismut, Tellur, und besonders bevorzugt Antimon;
- ein elektro-kalorisches Material, umfassend bevorzugt ein Ter-Polymer oder eine Blei-Keramik;
- ein elasto-kalorisches Material, umfassend bevorzugt Nickel und/oder Titan, besonders bevorzugt gebildet von einer Nickel-Titan-Legierung oder einer Nickel-Titan-Legierung mit zusätzlichen Legierungselementen wie Kupfer, Vanadium und Kobalt; und
- ein magneto-kalorisches Material, umfassend bevorzugt Gadolinium oder Lanthan.

Gemäß einer Ausführungsform der Erfindung ist eine Kaskade eine räumlich gestaffelte Anordnung von den Wärmespeichern, welche voneinander thermisch entkoppelt sind, wobei ein Wärmeaustausch durch Wandleitung und/oder Leckage nicht zwangsläufig ausgeschlossen ist.

Gemäß einer Ausführungsform der Erfindung weist ein jeweiliges Speicherelement genau zwei Endpositionen auf, wobei eine erste der Endpositionen in einem ersten der Wärmespeicher und eine zweite Endposition in einem zweiten der Wärmespeicher angeordnet ist, und wobei bevorzugt ein solches Speicherelement betriebsgemäß ausschließlich zwischen diesen beiden Endpositionen hin und her bewegbar ist. Dies entspricht einem Wechseln der Position der Speicherelemente zwischen jeweils genau zwei der Wärmespeicher.

Gemäß einer Ausführungsform der Erfindung ist das Triebmittel über ein Getriebe, beispielsweise eine Kurbelwelle oder Nockenwelle, mit einem, einer Mehrzahl oder allen der Speicherelemente bewegungsübertragend verbunden.

Gemäß einer Ausführungsform der Erfindung ist das Triebmittel für eine Hubgeschwindigkeit zwischen zwei Endpositionen eines betreffenden Speicherelements von weniger als einer Zehntelsekunde, bevorzugt maximal einer Hundertstelsekunde, eingerichtet.

Gemäß einer Ausführungsform der Erfindung sind mindestens zwei, bevorzugt alle, der Speicherelemente mittels des Triebmittels ausschließlich zeitgleich bewegbar.

Gemäß einer Ausführungsform der Erfindung steht ein letzter der Wärmespeicher in der Kaskade in unmittelbarem Kontakt mit einer Umgebung, bevorzugt mittels eines Luft-Wärmetauschers, besonders bevorzugt mit einem Lüftermodul.

Gemäß einer Ausführungsform der Erfindung ist zumindest einer der Wärmespeicher mit einem Fluid gefüllt, beispielsweise mit Öl oder mit Wasser beziehungsweise mit einer Wasser-Öl-Emulsion.

Gemäß einer Ausführungsform der Erfindung ist zumindest einer der Wärmespeicher, bevorzugt einer oder alle der Zwischenspeicher, ein Festkörper.

Gemäß einer Ausführungsform der Erfindung steht ein Zwischenspeicher nicht in Kontakt mit einer Umgebung, sondern steht ausschließlich mittelbar, und zwar in der Reihenfolge der Kaskade, über den letzten Wärmespeicher mit einer Umgebung im Wärmeaustausch.

Gemäß einer Ausführungsform der Erfindung ist mittels von extern zugeführter oder nach extern abgeführter Energie, bevorzugt in Form von elektrischem Strom, eine Temperaturänderung in dem kalorischen Speicherelement von minimal fünf Kelvin, bevorzugt minimal 10 K, bewirkbar.

Gemäß einer Ausführungsform der Erfindung ist eine Dauer zum Ändern der Temperatur eines kalorischen Speicherelements unter fünf Zehntelsekunden, bevorzugt maximal eine Zehntelsekunde.

Gemäß einer Ausführungsform der Erfindung ist ein thermo-elektrisches Material eine Bi₂Te₃-Legierung oder eine Bi-Sb-Te-Legierung.

Gemäß einer Ausführungsform der Erfindung ist ein elektro-kalorisches Material P(VDF-TrFE-CFE), P(VDF-TrFE) oder Pb(ZrTi)O₃.

Gemäß einer Ausführungsform der Erfindung ist ein elasto-kalorisches Material Cu-Al-Ni, NiTiCo, NiTi, NiTiCu oder CuZn-Al, NiTiCuV.

Gemäß einer Ausführungsform der Erfindung ist - ein magneto-kalorisches Material Gd5(Si,Ge)₄, La(Fe,Co,Si)₁₃, La(Fe,Si)₁₃ oder Gd.

Gemäß einer Ausführungsform der Erfindung umfasst mindestens eines, bevorzugt alle, der kalorischen Speicherelemente ein elasto-kalorisches Material und ist für eine Temperaturänderung des betreffenden Speicherelements das elasto-kalorische Material verformbar.

Gemäß einer Ausführungsform ist eine mittels des diesem Speicherelement zugehörigen Triebmittels ausgeführte Antriebsbewegung zum Bewegen dieses Speicherelements zwischen den wechselnden Positionen in wärmeleitendem Kontakt mit den zugehörigen Wärmespeichern gemeinsam mit dem Verformen des elasto-kalorischen Materials eine Kreis- oder Linearbewegung.

Gemäß einer Ausführungsform führt ein Speicherelement zwischen den wechselnden Positionen in wärmeleitendem Kontakt mit den zugehörigen Wärmespeichern eine Linearbewegung aus.

Gemäß einer Ausführungsform der Erfindung ist eine elastische Stauchung beziehungsweise Streckung des elasto-kalorischen Materials mittels eines Drehmoments des Triebmittels, bevorzugt umfassend als Drehmomentquelle einen Elektro-Motor, ausführbar.

Gemäß einer Ausführungsform der Erfindung ist eine Ellipsenbewegung mittels einer Kurbelwelle oder Nockenwelle, bevorzugt mittels eines Drehmoments angetrieben von einem Rotor eines Elektro-Motors, ausführbar.

Gemäß einer Ausführungsform der Erfindung sind die Bewegungen der elasto-kalorischen Speicherelemente zueinander synchronisiert, bevorzugt mittels einer Kurbelwelle oder Nockenwelle.

Gemäß einer Ausführungsform der Erfindung umfasst die Bewegung zumindest eines der Speicherelemente eine Verkippung beziehungsweise einer Verwindung in sich mit der Folge einer elastischen Stauchung beziehungsweise Dehnung infolge dieser Verkippung beziehungsweise Verwindung in sich.

Gemäß einer Ausführungsform der Erfindung ist das elasto-kalorische Material mindestens eines, bevorzugt aller, der Speicherelemente mittels des jeweils zugehörigen Triebmittels sowohl druckbelastbar als auch zugbelastbar.

Gemäß einer Ausführungsform der Erfindung ist infolge einer Druckbelastung oder Zugbelastung eine Temperaturerhöhung und infolge einer Entlastung ein Temperaturabfall in dem elasto-kalorischen Speicherelement bewirkbar.

Gemäß einer Ausführungsform der Erfindung ist mittels des elasto-kalorischen Speicherelements ein Wärmespeicher, in welchem das betreffende Speicherelement aktuell positioniert ist, erwärmbar und umgekehrt auch abkühlbar.

Gemäß einer Ausführungsform der Erfindung ist zwischen jeweils zwei Wärmespeichern jeweils ein Trennelement zu deren fluidischer Trennung angeordnet, wobei ein Speicherelement zum Wechseln seiner Position zwischen den Wärmespeichern durch ein zugehöriges Trennelement hindurchführbar ist,
wobei bevorzugt das durch das Trennelement hindurchzuführende Speicherelement ausschließlich senkrecht zu dem Trennelement bewegbar ist.

Gemäß einer Ausführungsform der Erfindung ist das Trennelement von mindestens einer Trennwand gebildet.

Gemäß einer Ausführungsform der Erfindung weist das Trennelement eine Öffnung auf, durch welche ein Bauelement geführt ist, an welchem mindestens ein, bevorzugt jeweils ein einziges, kalorisches Speicherelement und ein führendes Dichtelement angeordnet ist, wobei mittels des Dichtelements mindestens bei den Endpositionen des betreffenden Speicherelements die zugehörige Öffnung des Trennelements abgedichtet ist.

Gemäß einer Ausführungsform der Erfindung ist die rein senkrechte relative Bewegung zu dem Trennelement von einer Verkippung beziehungsweise Verwindung des betreffenden Speicherelements in sich überlagert.

Gemäß einer Ausführungsform der Erfindung ist mindestens einer der Wärmespeicher ein Kanal einer Kreisleitung für ein Kühlmittel.

Gemäß einer Ausführungsform der Erfindung ist ein Wärmespeicher ein geschlossenes Gefäß, wobei bevorzugt in dem Gefäß eine Umwälzung eines Wärmespeicherfluids stattfindet.

Gemäß einer Ausführungsform der Erfindung ist das in dem als Kanal ausgeführten Wärmespeicher befindliche Fluid ein dauerhaft umgewälztes Kühlmittel eines Thermomanagementmoduls [TMM], beziehungsweise eines Teilkreises eines solchen TMM.

Gemäß einer Ausführungsform der Erfindung sind mindestens zwei der Wärmespeicher zum Temperieren jeweils mindestens einer Komponente eingerichtet.

Gemäß einer Ausführungsform der Erfindung ist ein erster Wärmespeicher für ein erstes Temperaturniveau als Wunschtemperatur eingerichtet, und ein anderer Wärmespeicher für ein anderes Temperaturniveau als Wunschtemperatur eingerichtet.

Gemäß einer Ausführungsform der Erfindung ist eine Wunschtemperatur für einen ersten Wärmespeicher volatiler als eine Wunschtemperatur für einen zweiten Wärmespeicher.

Gemäß einer Ausführungsform der Erfindung ist ein erster Wärmespeicher mit einem anderen Fluid befüllt als ein anderer Wärmespeicher, beispielsweise ein Wärmespeicher mit Öl und ein Wärmespeicher mit Wasser beziehungsweise einer Wasser-Öl-Emulsion oder mit einem Kältemittel.

Gemäß einem weiteren Aspekt ist ein Verfahren zum Betreiben einer Wärmepumpe nach einer Ausführungsform gemäß der obigen Beschreibung vorgeschlagen, aufweisend die folgenden Schritte:
i. bei Abweichen einer Temperatur in dem ersten Wärmespeicher von einer Wunschtemperatur, Ausgleichen der Temperatur zwischen dem ersten Wärmespeicher und dem ersten kalorischen Speicherelement, indem das erste kalorische Speicherelement in wärmeleitendem Kontakt mit dem ersten Wärmespeicher positioniert ist;
ii. mittels externem Energieaustausch zwischen dem ersten kalorischen Speicherelement und einer externen Energiequelle, Verändern der Temperatur des ersten kalorischen Speicherelements weg von der Wunschtemperatur derart, dass eine Temperaturdifferenz im Vergleich zu der Temperatur in dem zweiten Wärmespeicher vergrößert wird, und
   mittels des zugehörigen Triebmittels, Bewegen des ersten kalorischen Speicherelements von seiner Position in wärmeleitendem Kontakt mit dem ersten Wärmespeicher weg in eine Position in wärmeleitendem Kontakt mit dem zweiten Wärmespeicher;
**iii.** Ausgleichen der Temperatur zwischen dem zweiten Wärmespeicher und dem ersten kalorischen Speicherelement, indem das erste kalorische Speicherelement in wärmeleitendem Kontakt mit dem zweiten Wärmespeicher positioniert ist;
iv. mittels im Vergleich zu Schritt ii. umgekehrtem externem Energieaustausch zwischen dem ersten kalorischen Speicherelement und einer externen Energiequelle, Verändern der Temperatur des ersten kalorischen Speicherelements, und

mittels des zugehörigen Triebmittels, Bewegen des ersten kalorischen Speicherelements von seiner Position in wärmeleitendem Kontakt mit dem zweiten Wärmespeicher weg in eine Position in wärmeleitendem Kontakt mit dem ersten Wärmespeicher,
wobei zeitlich überschneidend, bevorzugt zeitgleich, Schritt i. bis Schritt iv. in gleicher Weise von dem mindestens einen weiteren kalorischen Speicherelement zwischen dem zweiten Wärmespeicher beziehungsweise dem weiteren Wärmespeicher und dem weiteren Wärmespeicher beziehungsweise dem letzten Wärmespeicher ausgeführt wird,
wobei die Schritte des Verfahrens wiederholt werden, bis in dem ersten Wärmespeicher die Wunschtemperatur erreicht ist.

Gemäß einer Ausführungsform der Erfindung wird in Schritt ii. und/oder in Schritt iv. das Bewegen mit dem Verändern der Temperatur gleichzeitig, zeitlich überschneidend, davor oder danach ausgeführt.

Gemäß einer Ausführungsform wird ein Speicherelement zwischen Wärmespeichern temperaturgesteuert bewegt.

Gemäß einer Ausführungsform wird ein Speicherelement zwischen Wärmespeichern kalorisch gesteuert bewegt, wobei nach dem Übergang einer vorbestimmten Wärmemenge das Speicherelement in den jeweils anderen Wärmespeicher bewegt wird.

Gemäß einer Ausführungsform werden alle Speicherelemente gleichzeitig bewegt, beispielsweise wenn bei einem einzigen der Speicherelemente eine vorbestimmte Temperatur erreicht wird und/oder von einem einzigen der Speicherelemente eine vorbestimmte Wärmemenge an den jeweiligen Wärmespeicher übertragen worden ist.

Gemäß einer Ausführungsform der Erfindung wird in Schritt i. und in Schritt iii. das Ausgleichen der Temperaturen passiv, also ausschließlich mittels Wärmestrahlung, freie Konvektion und/oder Wärmeleitung, durchgeführt.

Gemäß einer Ausführungsform der Erfindung werden die analogen Schritte der weiteren kalorischen Speicherelemente synchron, und bevorzugt identisch, mit den hier beschriebenen Schritten i. bis iv. ausgeführt.

Gemäß einer Ausführungsform der Erfindung sind weiterhin die folgenden Schritte umfasst:
v. bei Abweichen einer weiteren Temperatur in mindestens einem weiteren der Wärmespeicher von einer Wunschtemperatur, Ausgleichen der Temperatur zwischen dem betreffenden Wärmespeicher und einem mit dem betreffenden Wärmespeicher in wärmeleitendem Kontakt positionierten kalorischen Speicherelement;
vi. mittels externem Energieaustausch zwischen dem betreffenden kalorischen Speicherelement und einer externen Energiequelle, Verändern der Temperatur dieses kalorischen Speicherelements weg von der Wunschtemperatur derart, dass eine Temperaturdifferenz im Vergleich zu der Temperatur in dem zweiten Wärmespeicher vergrößert wird, und
mittels des zugehörigen Triebmittels, Bewegen des betreffenden kalorischen Speicherelements von seiner Position in wärmeleitendem Kontakt mit dem betreffenden Wärmespeicher weg in eine Position in wärmeleitendem Kontakt mit einem anderen Wärmespeicher,
wobei in gleicher Weise wie Schritt iii. bis Schritt iv. in einem Schritt vii. bis einem Schritt viii. ein umgekehrter Energieaustausch und eine umgekehrte Bewegung des betreffenden kalorischen Speicherelements ausgeführt wird, und Schritt v. bis Schritt viii. wiederholt werden, bis in dem betreffenden Wärmespeicher die Wunschtemperatur erreicht ist,
wobei bevorzugt Schritt i. bis Schritt iv. und Schritt v. bis Schritt viii. zeitlich überschneidend ausgeführt werden.

Gemäß einer Ausführungsform der Erfindung wird in Schritt vi. und/oder in Schritt viii. das Bewegen mit dem Verändern der Temperatur gleichzeitig, zeitlich überschneidend, davor oder danach ausgeführt.

Gemäß einer Ausführungsform der Erfindung wird in Schritt v. und in Schritt vii. das Ausgleichen der Temperaturen passiv, also ausschließlich mittels Wärmestrahlung, freie Konvektion und/oder Wärmeleitung, durchgeführt.

Gemäß einer Ausführungsform der Erfindung werden die analogen Schritte der weiteren kalorischen Speicherelemente synchron, und bevorzugt identisch, mit den hier beschriebenen Schritten v. bis viii. und/oder den Schritten i. bis iv. ausgeführt.

Gemäß einem weiteren Aspekt wird ein Kraftfahrzeug vorgeschlagen, umfassend mindestens eine zu temperierende Komponente und eine Wärmepumpe nach einer Ausführungsform gemäß der obigen Beschreibung für die zu temperierende Komponente,
wobei bevorzugt die zu temperierende Komponente mittels eines Verfahrens nach einer Ausführungsform gemäß der obigen Beschreibung temperierbar ist.

Gemäß einer Ausführungsform der Erfindung ist eine zu temperierende Komponente ein Antriebsaggregat zum Vortrieb, eine Hochvolt-Batterie, ein Pulswechselrichter, eine Leistungselektronik und/oder der Luftstrom für die Klimatisierung des Fahrzeuginnenraums des Kraftfahrzeugs.

Gemäß einer Ausführungsform der Erfindung ist eine zu temperierende Komponente ein Fahrzeuginnenraum.

Gemäß einem weiteren Aspekt wird vorgeschlagen, eine Wärmepumpe nach einer Ausführungsform gemäß der obigen Beschreibung für eine zu temperierende stationäre Komponente einzusetzen,
wobei bevorzugt die zu temperierende stationäre Komponente mittels eines Verfahrens nach einer Ausführungsform gemäß der obigen Beschreibung temperierbar ist.

Ausführungsbeispiele der Erfindung werden nachstehend anhand der Zeichnung näher erläutert. Es zeigen:
- Fig. 1:: eine schematische Schrittansicht einer Wärmepumpe mit zwei kalorischen Speicherelementen,
- Fig. 2:: eine schematische Schrittansicht einer Wärmepumpe mit drei kalorischen Speicherelementen,
- Fig. 3:: ein Diagramm mit den Temperaturänderungen in einer Wärmepumpe nach Fig. 1 und nach Fig. 2,
- Fig. 4:: ein Kraftfahrzeug mit zu temperierenden Komponenten und einer Wärmepumpe, und
- Fig. 5:: ein Flussdiagramm eines Verfahren zum Betreiben einer Wärmepumpe gemäß Fig. 1 oder Fig. 2.

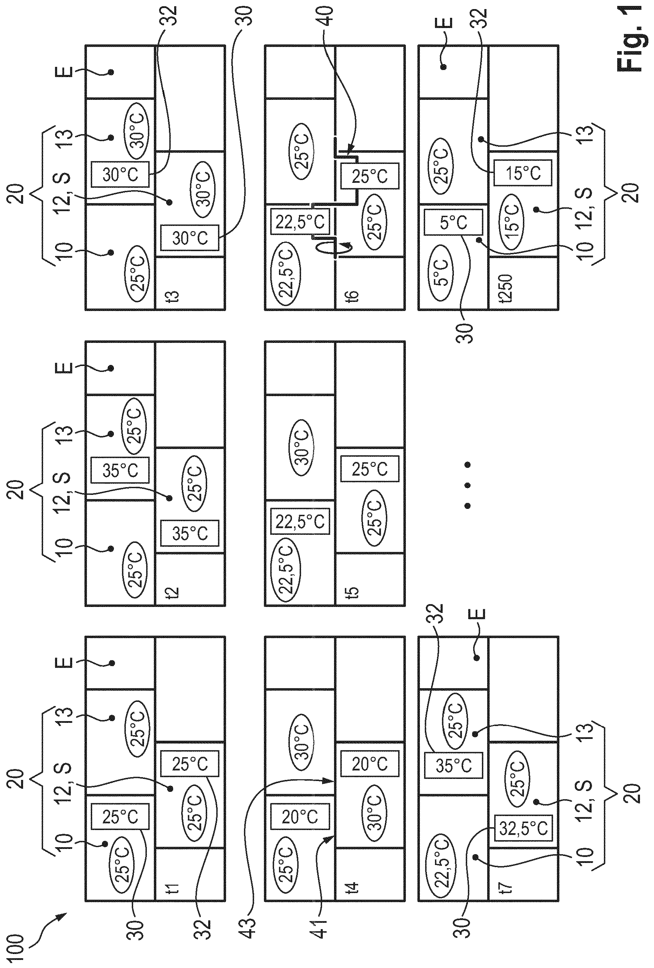

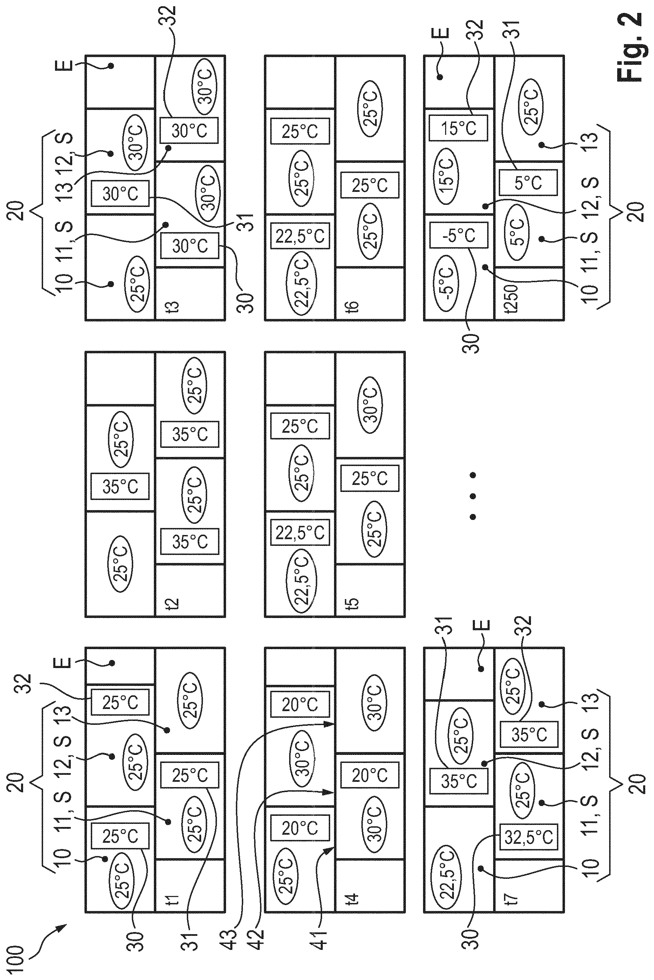

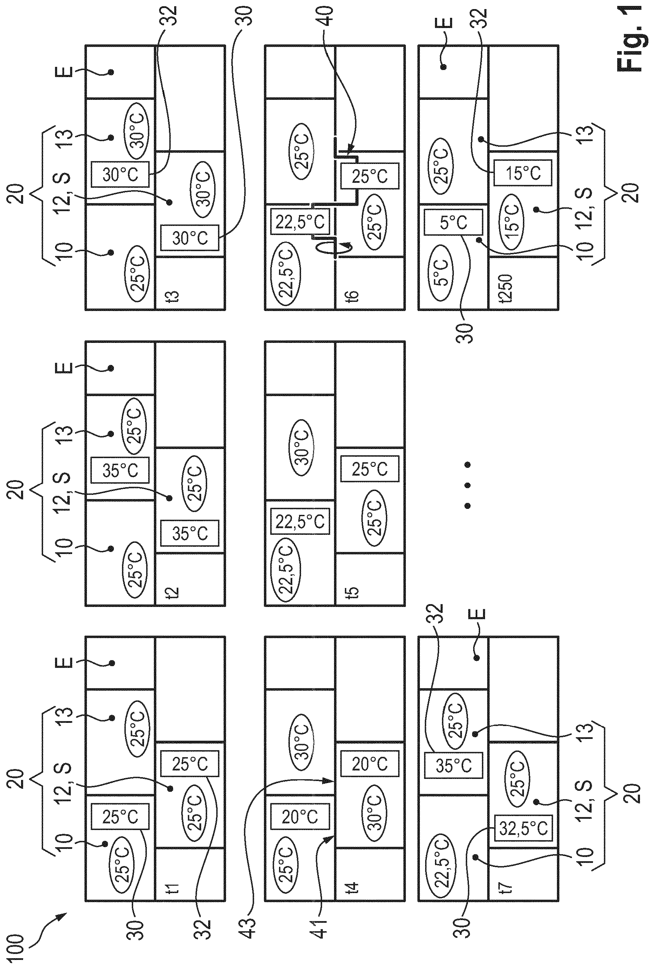

Fig. 1 zeigt eine schematische Schrittansicht einer Wärmepumpe 100 mit zwei kalorischen Speicherelementen 30, 31. Jedes der gezeigten acht Rechtecke ist baulich identisch und zeigt jeweils die gleiche Wärmepumpe 100 mit der jeweiligen Kaskade 20. Die Bezugszeichen sind rein repräsentativ nur teilweise platziert, sind aber auf jedes der Rechtecke analog übertragbar. Die Kaskade 20 umfasst einen ersten Wärmespeicher 10, welcher über ein erstes Trennelement 41 thermisch entkoppelt neben einem dritten Wärmespeicher 12 angeordnet ist. Es sei darauf hingewiesen, dass hier für die Einheitlichkeit der Beschreibung mit der Ausführungsform gemäß Fig. 2 die Ordinalzahl zwei, betreffend also den zweiten Wärmespeicher 11, das zweite Trennelement 42 und das zweite kalorische Speicherelement 31, weggelassen ist und in dieser beispielhaften Ausführungsform nicht vorkommt. Jedes der gezeigten acht Rechtecke umfasst weiterhin einen vierten als letzten Wärmespeicher 13, welcher über ein drittes Trennelement 43 thermisch entkoppelt neben dem dritten Wärmespeicher 12 angeordnet ist. Zwischen dem ersten Wärmespeicher 10 und dem dritten Wärmespeicher 12 ist durch das erste Trennelement 41 hindurch ein erstes kalorisches Speicherelement 30 bewegbar, sodass also eine Position des ersten kalorischen Speicherelements 30 in dem ersten Wärmespeicher 10 und eine Position des ersten kalorischen Speicherelements 30 in dem dritten Wärmespeicher 12 wechselbar ist. Genauso ist zwischen dem dritten Wärmespeicher 12 und dem letzten Wärmespeicher 13 durch das letzte Trennelement 43 hindurch ein letztes kalorisches Speicherelement 32 bewegbar, sodass also eine Position des letzten kalorischen Speicherelements 32 in dem dritten Wärmespeicher 12 und eine Position des letzten kalorischen Speicherelements 32 in dem letzten Wärmespeicher 13 wechselbar ist.

Es sei darauf hingewiesen, dass bei einer Ausführungsform das jeweilige Speicherelement nicht in den jeweiligen Wärmespeicher positioniert wird, sondern ausschließlich in wärmeleitendem Kontakt mit dem (also an dem) jeweiligen Wärmespeicher (positioniert) ist, beispielsweise in Kontakt mit einer Außenwand des jeweiligen Wärmespeichers tritt, und der Wärmeaustausch dann über Wärmeleitung zwischen diesen Festkörpern stattfindet. Beispielsweise überträgt dann ein elasto-kalorischer Draht beziehungsweise ein elasto-kalorisches Band Wärme über Kontakt an beispielsweise ein Aluminium-Gehäuse des betreffenden Wärmespeichers. Innerhalb des Wärmespeichers kann dann zusätzlich oder alternativ die Wärme an ein im Wärmespeicher befindliches Fluid durch Wärmeübergang übertragen werden. Weiterhin sei darauf hingewiesen, dass alle oder einige der Wärmespeicher (bevorzugt bei den Zwischenspeichern S) ausschließlich aus einem Festkörper bestehen und kein Fluid beinhalten.

Der dritte Wärmespeicher 12 ist hier ein Zwischenspeicher S, also weder mit der ersten Komponente 50 noch mit der Umgebung E in unmittelbarem Kontakt zum Wärmeaustausch, sondern ausschließlich mittels des ersten Wärmespeichers 10 beziehungsweise des letzten Wärmespeichers 13. Dabei ist allerdings nicht zwangsläufig ausgeschlossen, dass der dritte Wärmespeicher 12 mit einer weiteren Komponente in unmittelbarem Wärmeaustausch steht. Bei den dargestellten Schritten ist dies jedoch nicht beachtet. Der letzte Wärmespeicher 13 steht, bevorzugt unmittelbar, mit der Umgebung E im Wärmeaustausch, beispielsweise über einen Luft-Wärmetauscher.

In der obersten Zeile und linken Spalte ist zum Zeitpunkt t1 die Wärmepumpe 100 in einer Ausgangstemperatur gezeigt, wobei alle Wärmespeicher 10, 12, 13 sowie auch die kalorischen Speicherelemente 30, 32 eine Temperatur von 25 °C aufweisen.

In der mittleren Spalte oben ist zeitlich anschließend zum Zeitpunkt t2 gezeigt, dass die Speicherelemente 30, 32 beide ihre Position gewechselt haben und zeitlich überschneidend durch externe Energiezufuhr um zehn Kelvin erwärmt worden sind. Im Falle eines elasto-kalorischen Materials der Speicherelemente 30, 32 ist beispielsweise mittels Aufbringen eines Drehmoments ein solches Speicherelement 30, 32 deformiert worden und infolge eines Phasenübergangs des Gefüges von Austenit zu Martensit der Temperaturhub bewirkt. Alternativ oder zusätzlich ist bei einem anderen kalorischen Material die Temperaturerhöhung mittels Zuführen von elektrischer Energie, bei einem thermo-elektrischen Material in Form von Stromfluss, bei einem elektro-kalorischen Material in Form von einem Anheben der elektrischen Spannung und bei einem magneto-kalorischen Material in Form von einer erhöhten Feldstärke eines elektrisch induzierten Magnetfelds, bewirkt.

Oben in der rechten Spalte ist zeitlich anschließend zum Zeitpunkt t3 gezeigt, wie sich die Temperaturen in den Wärmespeichern 12, 13 mit dem jeweiligen kalorischen Speicherelement 30, 32 ausgeglichen haben.

Links in der mittleren Zeile ist zeitlich anschließend zum Zeitpunkt t4 gezeigt, dass die Speicherelemente 30, 32 beide ihre Position gewechselt haben und zeitlich überschneidend durch externe Energieabfuhr um zehn Kelvin abgekühlt worden sind. Im Falle eines elasto-kalorischen Materials der Speicherelemente 30, 32 ist beispielsweise mittels Entlastung, beispielsweise mittels Aufheben der Wirkung eines zuvor aufgebrachten Drehmoments, ein solches Speicherelement 30, 32 entlastet worden, sodass es sich wieder ausgedehnt hat und infolge eines Phasenübergangs des Gefüges von Martensit zu Austenit der Temperaturhub bewirkt. Alternativ oder zusätzlich ist bei einem anderen kalorischen Material die Temperatursenkung mittels Abführen von elektrischer Energie, bei einem thermo-elektrischen Material in Form von einem im Vergleich zu dem zuvor beschriebenen Vorgang bezogen auf die mittlere Spalte oben umgekehrten Stromfluss, bei einem elektro-kalorischen Material in Form von einem Abnehmen der elektrischen Spannung, also mit umgekehrtem Vorzeichen zu obigem Vorgang, und bei einem magneto-kalorischen Material in Form von einem Wegnehmen beziehungsweise deutlichen Reduzieren einer Feldstärke eines elektrisch induzierten Magnetfelds, bewirkt.

In der mittleren Spalte in der mittleren Zeile ist zeitlich anschließend zum Zeitpunkt t5 gezeigt, wie sich die Temperaturen in den Wärmespeichern 10, 12 mit dem jeweiligen kalorischen Speicherelement 30, 32 ausgeglichen haben.

In der mittleren Spalte rechts ist zeitgleich oder zeitlich anschließend zum Zeitpunkt t6 gezeigt, wie sich die Temperatur in dem letzten Wärmespeicher 13 mithilfe der Umgebung E abgesenkt hat.

Von nun an wiederholt sich zeitlich anschließend in der untersten Zeile ab links ab Zeitpunkt t7 dieser Zyklus vielfach, bis in der letzten Zeile rechts hier zum Zeitpunkt t250 die Wunschtemperatur in dem ersten Wärmespeicher 10 erreicht ist.

Fig. 2 zeigt eine schematische Schrittansicht einer Wärmepumpe 100 mit drei kalorischen Speicherelementen 30, 31, 32. Auch hier ist nach dem gleichen Darstellungsprinzip jedes der gezeigten acht Rechtecke baulich identisch und zeigt jeweils die gleiche Wärmepumpe 100 mit der jeweiligen Kaskade 20. Die Bezugszeichen sind auch hier rein repräsentativ nur teilweise platziert, sind aber auf jedes der Rechtecke analog übertragbar. Die Kaskade 20 umfasst hier zusätzlich zu den in Fig. 1 beschriebenen Wärmespeichern 10, 12, 13 einen zweiten Wärmespeicher 11, welcher über ein erstes Trennelement 41 thermisch entkoppelt neben dem ersten Wärmespeicher 10 und über ein zweites Trennelement 42 thermisch entkoppelt neben dem dritten Wärmespeicher 12 angeordnet ist. Jedes der gezeigten acht Rechtecke umfasst weiterhin ein zweites kalorisches Speicherelement 31, welches durch das zweite Trennelement 42 hindurch bewegbar ist, sodass also eine Position des zweiten kalorischen Speicherelements 31 in dem (beziehungsweise an dem) dritten Wärmespeicher 12 und eine Position des zweiten kalorischen Speicherelements 31 in dem (beziehungsweise an dem) vierten (letzten) Wärmespeicher 13 wechselbar ist. Der zweite Wärmespeicher 11 ist wie der letzte Wärmespeicher 13 hierbei ein Zwischenspeicher S, also weder mit der ersten Komponente 50 noch mit der Umgebung E in unmittelbarem Kontakt zum Wärmeaustausch, sondern ausschließlich mittels des ersten Wärmespeichers 10 beziehungsweise des dritten Wärmespeichers 12 und des letzten Wärmespeichers 13. Dabei ist allerdings nicht zwangsläufig ausgeschlossen, dass der dritte Wärmespeicher 12 wie auch der letzte Wärmespeicher 13 mit einer weiteren Komponente 51 in unmittelbarem Wärmeaustausch stehen. Bei den dargestellten Schritten ist dies jedoch auch hier nicht beachtet. Der letzte Wärmespeicher 13 steht auch hier, bevorzugt unmittelbar, mit der Umgebung E im Wärmeaustausch, beispielsweise über einen Luft-Wärmetauscher. Für weitere Details wird ohne Ausschluss der Allgemeinheit rein der Übersichtlichkeit halber weitestgehend auf Fig. 1 und die zugehörige Beschreibung verwiesen.

In der obersten Zeile und linken Spalte ist zum Zeitpunkt t1 die Wärmepumpe 100 in einer Ausgangstemperatur gezeigt, wobei alle Wärmespeicher 10, 11, 12, 13 sowie auch die kalorischen Speicherelemente 30, 31, 32 eine Temperatur von 25 °C aufweisen.

In der mittleren Spalte oben ist zeitlich anschließend zum Zeitpunkt t2 gezeigt, dass die Speicherelemente 30, 31, 32 alle ihre Position gewechselt haben und zeitlich überschneidend durch externe Energiezufuhr um zehn Kelvin erwärmt worden sind.

Oben in der rechten Spalte ist zeitlich anschließend zum Zeitpunkt t3 gezeigt, wie sich die Temperaturen in den Wärmespeichern 11, 12, 13 mit dem jeweiligen kalorischen Speicherelement 30, 31, 32 ausgeglichen haben.

Links in der mittleren Zeile ist zeitlich anschließend zum Zeitpunkt t4 gezeigt, dass die Speicherelemente 30, 31, 32 alle ihre Position gewechselt haben und zeitlich überschneidend durch externe Energieabfuhr um zehn Kelvin abgekühlt worden sind.

In der mittleren Spalte in der mittleren Zeile ist zeitlich anschließend zum Zeitpunkt t5 gezeigt, wie sich die Temperaturen in den Wärmespeichern 10, 11, 12 mit dem jeweiligen kalorischen Speicherelement 30, 31, 32 ausgeglichen haben.

In der mittleren Spalte rechts ist zeitgleich oder zeitlich anschließend zum Zeitpunkt t6 gezeigt, wie sich die Temperatur in dem letzten Wärmespeicher 13 mithilfe der Umgebung E abgesenkt hat.

Von nun an wiederholt sich zeitlich anschließend in der untersten Zeile ab links ab Zeitpunkt t7 dieser Zyklus vielfach, bis in der letzten Zeile rechts hier zum Zeitpunkt t250 die Wunschtemperatur in dem ersten Wärmespeicher 10 erreicht ist.

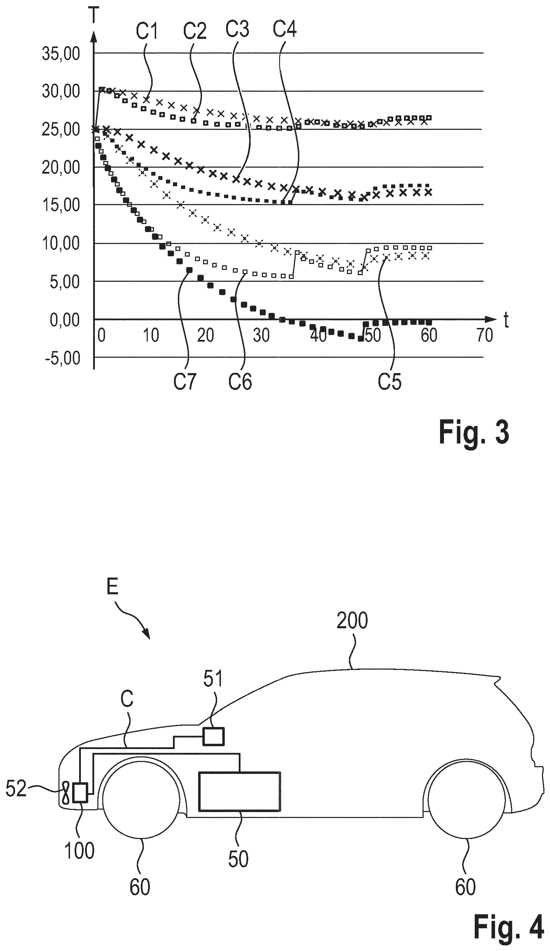

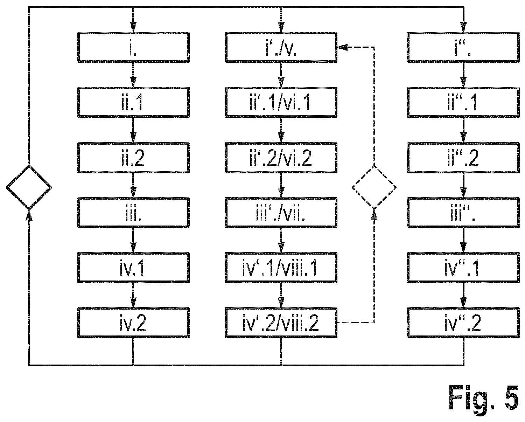

Fig. 3 zeigt ein Diagramm mit den Temperaturänderungen in einer Wärmepumpe 100 nach Fig. 1 und nach Fig. 2. Die Abszisse ist die Zeitachse t beziehungsweise die Zyklen und die Ordinate die Temperaturachse T in Grad Celsius. Die gekreuzten und quadratischen Punkte der Kurven C1, C2, C3, C4, C5, C6, C7 repräsentieren einen jeweiligen Zyklus, also zwei Wechsel beziehungsweise einen Hin-Wechsel und einen Rück-Wechsel der Positionen der zwei kalorischen Speicherelemente 30, 31 gemäß Fig. 1 beziehungsweise drei kalorischen Speicherelemente 30, 31, 32 gemäß Fig. 2, wie beispielsweise in Fig. 5 mit den Schritten i. bis iv. beschrieben. Beim Ausgangspunkt zum Zeitpunkt 0 befinden sich die Wärmespeicher 10, 11, 12, 13 miteinander im Gleichgewicht bei 25 °C. Bei diesem Beispiel ist zur Veranschaulichung und ohne Ausschluss der Allgemeinheit rein der Übersichtlichkeit halber eine Wärmemenge in dem ersten Wärmespeicher 10 konstant. In diesem Fall wird der erste Wärmespeicher 10 heruntergekühlt. Es sei darauf hingewiesen, dass dies mit der Kaskade 20 und den bewegbaren Speicherelementen 30, 31, 32 auch ohne Weiteres umgekehrt möglich ist, also der erste Wärmespeicher 10 auch erwärmbar ist.

Die oberste Kurve C1 mit gekreuzten Punkten zeigt den quasi-iterativen Temperaturverlauf in dem vierten (letzten) Wärmespeicher 13 der Wärmepumpe 100 in der Ausführungsform gemäß Fig. 1. Die zweit-oberste Kurve C2 mit quadratischen Punkten zeigt den quasi-iterativen Temperaturverlauf in dem vierten (letzten) Wärmespeicher 13 der Wärmepumpe 100 in der Ausführungsform gemäß Fig. 2. Beide diese Kurven C1, C2 starten in diesem Beispiel bei 25 °C und werden mit dem ersten Zyklus auf 30 °C angehoben, und werden dann nach und nach mit jedem Zyklus in Richtung 25 °C verschoben und dort gehalten. Die Kühlung wird beispielsweise mittels der Luft 52 aus der Umgebung E erzielt, welche hier zur Veranschaulichung und ohne Ausschluss der Allgemeinheit rein der Übersichtlichkeit halber eine konstante Temperatur aufweist.

Die darunter folgende Kurve C3 mit gekreuzten Punkten zeigt den quasi-iterativen Temperaturverlauf in dem zweiten Wärmespeicher 12 der Wärmepumpe 100 in der Ausführungsform gemäß Fig. 1, von welcher hier ein reiner Zwischenspeicher S gebildet ist. Die darunter folgende Kurve C4 mit quadratischen Punkten zeigt den quasi-iterativen Temperaturverlauf in dem dritten Wärmespeicher 12 der Wärmepumpe 100 in der Ausführungsform gemäß Fig. 2, von welcher hier ebenfalls ein reiner Zwischenspeicher S gebildet ist. Beide diese Kurven C3, C4 des in der Darstellung des Diagramms zweit-obersten Kurvenpaars starten in diesem Beispiel bei 25 °C und werden mit einem Überhub in Richtung 15 °C in Richtung etwa 17 °C verschoben und dort gehalten.

Die unterste Kurve C7 mit quadratischen Punkten zeigt den quasi-iterativen Temperaturverlauf in dem ersten Wärmespeicher 10 der Wärmepumpe 100 in der Ausführungsform gemäß Fig. 2, von welcher ein unmittelbarer Kontakt zu einer zu temperierenden Komponente 50, 51, wie beispielsweise in Fig. 4 gezeigt, gebildet ist. Diese Kurve C7 startet in diesem Beispiel bei 25 °C und wird dann nach und nach mit jedem Zyklus in Richtung -5 °C verschoben und von dort wieder auf 0 °C angehoben und dort gehalten. Die zu temperierende Komponente 50, 51 soll in diesem Fall mit einem Fluid bei etwa 0 °C, der hiesigen Wunschtemperatur, temperiert, also in diesem Fall von 25 °C heruntergekühlt werden.

Die darüber folgende Kurve C6 mit quadratischen Punkten zeigt den quasi-iterativen Temperaturverlauf in dem zweiten Wärmespeicher 11 der Wärmepumpe 100 in der Ausführungsform gemäß Fig. 2, von welcher hier ein reiner Zwischenspeicher S gebildet ist. Die darüber folgende Kurve C4 mit quadratischen Punkten zeigt den quasi-iterativen Temperaturverlauf in dem dritten Wärmespeicher 12 der Wärmepumpe 100 in der Ausführungsform gemäß Fig. 2, von welcher hier ebenfalls ein reiner Zwischenspeicher S gebildet ist.

Die dritt-unterste Kurve C5 mit gekreuzten Punkten zeigt den quasi-iterativen Temperaturverlauf in dem ersten Wärmespeicher 10 der Wärmepumpe 100 in der Ausführungsform gemäß Fig. 1, von welcher ein unmittelbarer Kontakt zu einer zu temperierenden Komponente 50, 51, wie beispielsweise in Fig. 4 gezeigt, gebildet ist. Diese Kurve C5 startet in diesem Beispiel bei 25 °C und wird dann nach und nach mit jedem Zyklus in Richtung 5 °C verschoben und von dort wieder auf 10 °C angehoben und dort gehalten. Die zu temperierende Komponente 50, 51 soll in diesem Fall mit einem Fluid bei etwa 10 °C, der hiesigen Wunschtemperatur, temperiert, also in diesem Fall von 25 °C heruntergekühlt werden. Hier ist damit zu erkennen, dass durch den zusätzlichen Wärmespeicher 11 die Temperatur deutlich stärker abgesenkt wird als mit weniger Wärmespeichern.

Fig. 4 zeigt in einer schematischen Seitenansicht ein Kraftfahrzeug 200 mit zu temperierenden Komponenten 50, 51 und einer Wärmepumpe 100, welche mittels einer Kreisleitung C mit einem Fluid als Wärmeübertrager thermisch verbunden sind, beispielsweise als Thermomanagementmodul oder als Teil eines solchen. Hier ist eine erste Komponente 50 beispielsweise ein Antriebsaggregat zum Vortrieb über die Räder 60 und/oder eine Hochvolt-Batterie. Die zweite Komponente 51 ist beispielsweise der Zuluftkanal zum Temperieren von einem Fahrzeuginnenraum. Vorne im Kraftfahrzeug 200 ist eine Wärmepumpe 100 schematisch dargestellt, welche hier optional über einen Lüfter 52 zwangskonvektiv zur Umgebung E temperierbar ist. Weitere Komponenten sind beispielsweise eine Hochvolt-Batterie, ein Pulswechselrichter, ein OnBoard-Ladegerät und weitere wärmebelastete beziehungsweise in einem engen Temperaturbereich zu haltende Komponenten. Genauso ist die hier vorgeschlagene Wärmepumpe 100 für stationäre Anwendungen geeignet, wie beispielsweise eine stationäre Hochvolt-Batterie, ein AC/DC-Wandler, aber auch andere Wärme entwickelnde und/oder wärmeempfindliche Geräte.

Fig. 5 zeigt ein Flussdiagramm eines Verfahren zum Betreiben einer Wärmepumpe 100 gemäß Fig. 1, mit ausschließlich den Schritten i. und i". und folgenden, oder Fig. 2, mit Schritten i., i'. und i". und folgenden. In Schritt i. wird bei Abweichen einer Temperatur in dem ersten Wärmespeicher 10 von einer Wunschtemperatur, die Temperatur zwischen dem ersten Wärmespeicher 10 und dem ersten kalorischen Speicherelement 30 ausgeglichen, indem das erste kalorische Speicherelement 30 in beziehungsweise an dem ersten Wärmespeicher 10 positioniert ist. In Schritt ii. wird mittels externem Energieaustausch zwischen dem ersten kalorischen Speicherelement 30 und einer externen Energiequelle, die Temperatur des ersten kalorischen Speicherelements 30 weg von der Wunschtemperatur derart ausgeglichen, dass eine Temperaturdifferenz im Vergleich zu der Temperatur in dem zweiten Wärmespeicher 11 vergrößert wird, und mittels des zugehörigen Triebmittels 40, das erste kalorische Speicherelement 30 von dem ersten Wärmespeicher 10 in den zweiten Wärmespeicher 11 bewegt wird. In Schritt iii. wird die Temperatur zwischen dem zweiten Wärmespeicher 11 und dem ersten kalorischen Speicherelement 30 ausgeglichen, indem das erste kalorische Speicherelement 30 in beziehungsweise an dem zweiten Wärmespeicher 11 positioniert ist. In Schritt iv. wird mittels, im Vergleich zu Schritt ii. umgekehrtem externem Energieaustausch, zwischen dem ersten kalorischen Speicherelement 30 und einer externen Energiequelle, die Temperatur des ersten kalorischen Speicherelements 30 verändert, und mittels des zugehörigen Triebmittels 40 das erste kalorische Speicherelement 30 von dem zweiten Wärmespeicher 11 in den ersten Wärmespeicher 10 bewegt.

Zeitlich überschneidend, hier zeitgleich dargestellt, wird in den Schritten i'. bis iv'. das zweite kalorische Speicherelement 31 in gleicher Weise zwischen dem zweiten Wärmespeicher 11 und dem dritten Wärmespeicher 12 bei entsprechendem Temperaturausgleich und entsprechender, bevorzugt gleicher, Temperaturänderung infolge externem Energieaustausch bewegt. Zeitlich überschneidend, hier zeitgleich dargestellt, wird in den Schritten i". bis iv". das dritte beziehungsweise letzte kalorische Speicherelement 31 in gleicher Weise zwischen dem dritten Wärmespeicher 12 und dem vierten beziehungsweise letzten Wärmespeicher 13 bei entsprechendem Temperaturausgleich und entsprechender, bevorzugt gleicher, Temperaturänderung infolge externem Energieaustausch bewegt.

Die genannten Schritte des Verfahrens werden so lange wiederholt, bis in dem ersten Wärmespeicher 10 die Wunschtemperatur erreicht ist. Damit ist nicht ausgeschlossen, dass infolge eines Überhubs das Verfahren abgebrochen wird. Vielmehr ist eine Annährung an eine Wunschtemperatur entlang einer Regelungskurve, beispielsweise mit einem Überhub infolge einer Einpendelung, ausgeführt. Ein Erreichen der Wunschtemperatur bedeutet also, dass diese stabil erreicht ist.

Hier wird zudem überlagernd, hier zeitgleich dargestellt, in den Schritten v. bis viii. das zweite kalorische Speicherelement 31 in gleicher Weise zwischen dem zweiten Wärmespeicher 11 und dem dritten Wärmespeicher 12 bei entsprechendem Temperaturausgleich und entsprechender, bevorzugt gleicher, Temperaturänderung infolge externem Energieaustausch bewegt. Der Unterschied ist hier, dass der zweite Wärmespeicher 11 zugleich in, beispielsweise unmittelbarem, Kontakt mit einer zweiten Komponente 51 steht, während der erste Wärmespeicher 10 mit einer ersten Komponente 50 in, beispielsweise unmittelbarem, Kontakt zum Wärmeaustausch steht. Für diese zweite Komponente 51, also für den zweiten Wärmespeicher 11, ist damit eine zweite Wunschtemperatur einzuregeln. Die Abwärme oder auch die aufzunehmende Wärme ist dabei sowohl von dem ersten Wärmespeicher 10 als auch von dem dritten Wärmespeicher 12, oder alternativ oder zusätzlich mittelbar oder unmittelbar von der Umgebung E abführbar beziehungsweise von dort entnehmbar. Dies ist beispielsweise zustandsabhängig bedarfsgerecht geregelt. Es sei darauf hingewiesen, dass damit dann auch der betroffene Wärmespeicher 10, 12 mit geregelt werden muss, wie oben beschrieben, eben abhängig von der Wunschtemperatur in dem zweiten Wärmespeicher 11.

Es sei darauf hingewiesen, dass in einer realen Anwendung die Wunschtemperatur variieren kann und die Umgebungstemperatur teilweise erheblich veränderlich ist, im Besonderen bei einer Autofahrt. Auch sind Quereinträge von Wärme in die Elemente der Wärmepumpe 100 nicht ausgeschlossen. Der Ablauf gemäß Fig. 1 und Fig. 2 wird daher meist keiner realen Anwendung entsprechen, sondern zeigt lediglich das zugrundeliegende Verfahren unter starker Beschränkung der Randbedingen auf.

### Bezugszeichenliste

- 100: Wärmepumpe
- 200: Kraftfahrzeug

- 10: erster Wärmespeicher
- 11: zweiter Wärmespeicher
- 12: dritter Wärmespeicher
- 13: vierter (letzter) Wärmespeicher
- 20: Kaskade
- 30: erstes kalorisches Speicherelement
- 31: zweites kalorisches Speicherelement
- 32: drittes (letztes) kalorisches Speicherelement
- 40: Triebmittel
- 41: erstes Trennelement
- 42: zweites Trennelement
- 43: drittes (letztes) Trennelement
- 50: erste Komponente
- 51: zweite Komponente
- 52: Lüfter
- 60: Rad

- S: Zwischenspeicher
- E: Umgebung
- C: Kreisleitung

- t: Zeitachse
- T: Temperaturachse

- C1: erste Kurve
- C2: zweite Kurve
- C3: dritte Kurve
- C4: vierte Kurve
- C5: fünfte Kurve
- C6: sechste Kurve
- C7: siebte Kurve

## Patentansprüche

1. Wärmepumpe (100), umfassend:
- eine Mehrzahl von Wärmespeichern (10, 11, 12, 13), welche in einer Kaskade (20) hintereinander geschaltet sind;
- eine Mehrzahl von kalorischen Speicherelementen (30, 31, 32), welche wechselnd in wärmeleitendem Kontakt mit jeweils einem der Wärmespeicher (10, 11, 12, 13) positioniert sind; und
- mindestens ein Triebmittel (40) zum Wechseln der Position der Speicherelemente (30, 31, 32) zwischen den Wärmespeichern (10, 11, 12, 13),
wobei mindestens einer der Wärmespeicher (10) mit einer Komponente (50, 51) in Kontakt ist, um diese Komponente zu temperieren,
wobei ein letzter der Wärmespeicher (13) in der Kaskade (20) mit einer Umgebung (E) im Wärmeaustausch steht,
**dadurch gekennzeichnet, dass**
von mindestens einem der Wärmespeicher (11, 12) ein Zwischenspeicher (S) zum Übertragen von Wärme zwischen einem Wärmespeicher (10) in Kontakt mit einer zu temperierenden Komponente (50) und dem letzten Wärmespeicher (13) gebildet ist, wobei die kalorischen Speicherelemente (30, 31, 32) mindestens, bevorzugt ausschließlich, eines der folgenden Materialien umfassen:
- ein thermo-elektrisches Material, umfassend bevorzugt Bismut, Tellur, und besonders bevorzugt Antimon;
- ein elektro-kalorisches Material, umfassend bevorzugt ein Ter-Polymer oder eine Blei-Keramik;
- ein elasto-kalorisches Material, umfassend bevorzugt Nickel und/oder Titan, besonders bevorzugt gebildet von einer Nickel-Titan-Legierung oder einer Nickel-Titan-Legierung mit zusätzlichen Legierungselementen wie Kupfer, Vanadium und Kobalt; und
- ein magneto-kalorisches Material, umfassend bevorzugt Gadolinium oder Lanthan.

2. Wärmepumpe (100) nach Anspruch 1 , wobei mindestens eines, bevorzugt alle, der kalorischen Speicherelemente (30, 31, 32) ein elasto-kalorisches Material umfasst und für eine Temperaturänderung des betreffenden Speicherelements (30, 31, 32) das elasto-kalorische Material verformbar ist,
wobei bevorzugt eine mittels des diesem Speicherelement (30, 31, 32) zugehörigen Triebmittels (40) ausgeführte Antriebsbewegung zum Bewegen dieses Speicherelements (30, 31, 32) zwischen den wechselnden Positionen in wärmeleitendem Kontakt mit den zugehörigen Wärmespeichern (10, 11, 12, 13) gemeinsam mit dem Verformen des elasto-kalorischen Materials eine Kreis- oder Linearbewegung, besonders bevorzugt eine Ellipsenbewegung, ist.

3. Wärmepumpe (100) nach Anspruch 2, wobei das elasto-kalorische Material mindestens eines, bevorzugt aller, der Speicherelemente (30, 31, 32) mittels des jeweils zugehörigen Triebmittels (40) sowohl druckbelastbar als auch zugbelastbar ist.

4. Wärmepumpe (100) nach einem der vorhergehenden Ansprüche, wobei zwischen jeweils zwei Wärmespeichern (10, 11, 12, 13) jeweils ein Trennelement (41, 42, 43) zu deren fluidischer Trennung angeordnet ist, wobei ein Speicherelement (30, 31, 32) zum Wechseln seiner Position zwischen den Wärmespeichern (10, 11, 12, 13) durch ein zugehöriges Trennelement (41, 42, 43) hindurchführbar ist.

5. Wärmepumpe (100) nach einem der vorhergehenden Ansprüche, wobei mindestens einer der Wärmespeicher (10, 11, 12, 13) ein Kanal einer Kreisleitung (C) für ein Kühlmittel ist.

6. Wärmepumpe (100) nach einem der vorhergehenden Ansprüche, wobei mindestens zwei der Wärmespeicher (10, 11) zum Temperieren jeweils mindestens einer Komponente (50, 51) eingerichtet sind.

7. Verfahren zum Betreiben einer Wärmepumpe (100) nach einem der vorhergehenden Ansprüche, aufweisend die folgenden Schritte:
i. bei Abweichen einer Temperatur in dem ersten Wärmespeicher (10) von einer Wunschtemperatur, Ausgleichen der Temperatur zwischen dem ersten Wärmespeicher (10) und dem ersten kalorischen Speicherelement (30), indem das erste kalorische Speicherelement (30) in wärmeleitendem Kontakt mit dem ersten Wärmespeicher (10) positioniert ist;
ii. mittels externem Energieaustausch zwischen dem ersten kalorischen Speicherelement (30) und einer externen Energiequelle, Verändern der Temperatur des ersten kalorischen Speicherelements (30) weg von der Wunschtemperatur derart, dass eine Temperaturdifferenz im Vergleich zu der Temperatur in dem zweiten Wärmespeicher (11) vergrößert wird, und
mittels des zugehörigen Triebmittels (40), Bewegen des ersten kalorischen Speicherelements (30) von seiner Position in wärmeleitendem Kontakt mit dem ersten Wärmespeicher (10) weg in eine Position in wärmeleitendem Kontakt mit dem zweiten Wärmespeicher (11);
iii. Ausgleichen der Temperatur zwischen dem zweiten Wärmespeicher (11) und dem ersten kalorischen Speicherelement (30), indem das erste kalorische Speicherelement (30) in wärmeleitendem Kontakt mit dem zweiten Wärmespeicher (11) positioniert ist;
iv. mittels im Vergleich zu Schritt ii. umgekehrtem externem Energieaustausch zwischen dem ersten kalorischen Speicherelement (30) und einer externen Energiequelle, Verändern der Temperatur des ersten kalorischen Speicherelements (30), und
mittels des zugehörigen Triebmittels (40), Bewegen des ersten kalorischen Speicherelements (30) von seiner Position in wärmeleitendem Kontakt mit dem zweiten Wärmespeicher (11) weg in eine Position in wärmeleitendem Kontakt mit dem ersten Wärmespeicher (10),
wobei zeitlich überschneidend, bevorzugt zeitgleich, Schritt i. bis Schritt iv. in gleicher Weise von dem mindestens einen weiteren kalorischen Speicherelement (31, 32) zwischen dem zweiten Wärmespeicher (11) beziehungsweise dem weiteren Wärmespeicher (12) und dem weiteren Wärmespeicher (12) beziehungsweise dem letzten Wärmespeicher (13) ausgeführt wird,
wobei die Schritte des Verfahrens wiederholt werden, bis in dem ersten Wärmespeicher (10) die Wunschtemperatur erreicht ist.

8. Verfahren nach Anspruch 7, wobei weiterhin die folgenden Schritte umfasst sind:
v. bei Abweichen einer weiteren Temperatur in mindestens einem weiteren der Wärmespeicher (11) von einer Wunschtemperatur, Ausgleichen der Temperatur zwischen dem betreffenden Wärmespeicher (11) und einem mit dem betreffenden Wärmespeicher (11) in wärmeleitendem Kontakt positionierten kalorischen Speicherelement (31);
vi. mittels externem Energieaustausch zwischen dem betreffenden kalorischen Speicherelement (31) und einer externen Energiequelle, Verändern der Temperatur dieses kalorischen Speicherelements (31) weg von der Wunschtemperatur derart, dass eine Temperaturdifferenz im Vergleich zu der Temperatur in dem zweiten Wärmespeicher (11) vergrößert wird, und
mittels des zugehörigen Triebmittels (40), Bewegen des betreffenden kalorischen Speicherelements (30) von seiner Position in wärmeleitendem Kontakt mit dem betreffenden Wärmespeicher (11) weg in eine Position in wärmeleitendem Kontakt mit einem anderen Wärmespeicher (10),
wobei in gleicher Weise wie Schritt iii. bis Schritt iv. in einem Schritt vii. bis einem Schritt viii. ein umgekehrter Energieaustausch und eine umgekehrte Bewegung des betreffenden kalorischen Speicherelements (31) ausgeführt wird, und Schritt v. bis Schritt viii. wiederholt werden, bis in dem betreffenden Wärmespeicher (11) die Wunschtemperatur erreicht ist,
wobei bevorzugt Schritt i. bis Schritt iv. und Schritt v. bis Schritt viii. zeitlich überschneidend ausgeführt werden.

9. Kraftfahrzeug (200), umfassend mindestens eine zu temperierende Komponente (50, 51) und eine Wärmepumpe (100) nach einem von Anspruch 1 bis Anspruch 6 für die zu temperierende Komponente (50, 51),
wobei bevorzugt die zu temperierende Komponente (50, 51) mittels eines Verfahrens nach Anspruch 7 oder Anspruch 8 temperierbar ist.

## Claims

1. Heat pump (100), comprising:
- a plurality of heat accumulators (10, 11, 12, 13) which are connected in series in a cascade (20);
- a plurality of caloric storage elements (30, 31, 32), which are positioned alternately in heat-conducting contact with one of the heat accumulators (10, 11, 12, 13) respectively; and
- at least one propellant (40) for changing the position of the storage elements (30, 31, 32) between the heat accumulators (10, 11, 12, 13),
wherein at least one of the heat accumulators (10) is in contact with a component (50, 51) in order to temper said component,
wherein a final one of the heat accumulators (13) in the cascade (20) is in heat exchange with an environment (E),
**characterized in that**
an intermediate storage (S) is formed from at least one of the heat accumulators (11, 12) to transfer heat between a heat accumulator (10) in contact with a component (50) to be tempered and the last heat accumulator (13), wherein the caloric storage elements (30, 31, 32) comprise at least, preferably exclusively, one of the following materials:
- a thermos-electric material, preferably comprising bismuth, tellurium, and particularly preferably antimony;
- an electro-caloric material, preferably comprising a terpolymer or a lead-ceramic;
- an elasto-caloric material, preferably comprising nickel and/or titanium, particularly preferably formed from a nickel-titanium alloy or a nickel-titanium alloy with additional alloying elements such as copper, vanadium and cobalt; and
- a magneto-caloric material, preferably comprising gadolinium or lanthanum.

2. Heat pump (100) according to claim 1, wherein at least one, preferably all, of the caloric storage elements (30, 31, 32) comprises an elasto-caloric material and, for a change in temperature of the respective storage element (30, 31, 32), the elasto-caloric material is deformable,
wherein, preferably, a driving movement performed by means of the propellant (40) associated with this storage element (30, 31, 32) to move this storage element (30, 31, 32) between the alternating positions is in heat-conducting contact with the associated heat accumulators (10, 11, 12, 13) together with the deformation of the elasto-caloric material is a circular or linear motion, particularly preferably an elliptical motion.

3. Heat pump (100) according to claim 2, wherein the elasto-caloric material of at least one, preferably all, of the storage elements (30, 31, 32) can be subjected to both compressive and tensile loads by means of the respective associated propellant (40).

4. Heat pump (100) according to one of the preceding claims, wherein a separating element (41, 42, 43) each is arranged between each pair of heat accumulators (10, 11, 12, 13) to separate them fluidically, wherein a storage element (30, 31, 32) can be passed through an associated separating element (41, 42, 43) in order to change its position between the heat accumulators (10, 11, 12, 13).

5. Heat pump (100) according to one of the preceding claims, wherein at least one of the heat accumulators (10, 11, 12, 13) is a channel of a circuit (C) for a coolant.

6. Heat pump (100) according to one of the preceding claims, wherein at least two of the heat accumulators (10, 11) are configured for tempering at least one component (50, 51) each.

7. Method of operating a heat pump (100) according to one of the preceding claims, having the following steps:
i. upon deviation of a temperature in the first heat accumulator (10) from a desired temperature, equalizing the temperature between the first heat accumulator (10) and the first caloric storage element (30) by positioning the first caloric storage element (30) in heat-conducting contact with the first heat accumulator (10);
ii. by means of external energy exchange between the first caloric storage element (30) and an external energy source, altering the temperature of the first caloric storage element (30) away from the desired temperature such that a temperature difference compared to the temperature in the second heat accumulator (11) is increased, and
by means of the associated propellant (40), moving the first caloric storage element (30) away from its position in heat-conducting contact with the first heat accumulator (10) to a position in heat-conducting contact with the second heat accumulator (11);
iii. equalizing the temperature between the second heat accumulator (11) and the first caloric storage element (30) by positioning the first caloric storage element (30) in heat-conducting contact with the second heat accumulator (11);
iv. by means of an external energy exchange between the first caloric storage element (30) and an external energy source, which is the reverse of that in step ii., altering the temperature of the first caloric storage element (30), and
by means of the associated propellant (40), moving the first caloric storage element (30) from its position in heat-conducting contact with the second heat accumulator (11) to a position in heat-conducting contact with the first heat accumulator (10),
wherein, overlapping in time, preferably simultaneously, steps i. to iv. are carried out in the same manner by the at least one further caloric storage element (31, 32) between the second heat accumulator (11) and the further heat accumulator (12), respectively, and between the further heat accumulator (12) and the last heat accumulator (13), respectively
wherein the steps of the method are repeated until the desired temperature is reached in the first heat accumulator (10).

8. Method according to claim 7, wherein further the following steps are comprised:
v. wherein, upon deviation of a further temperature in at least one further heat accumulator (11) from a desired temperature, equalizing the temperature between the relevant heat accumulator (11) and a calorific storage element (31) positioned in heat-conducting contact with the relevant heat accumulator (11);
vi. by means of external energy exchange between the relevant caloric storage element (31) and an external energy source, altering the temperature of this caloric storage element (31) away from the desired temperature in such a way that a temperature difference compared to the temperature in the second heat accumulator (11) is increased, and
by means of the associated propellant (40), moving the relevant caloric storage element (30) from its position in heat-conducting contact with the relevant heat accumulator (11) to a position in heat-conducting contact with another heat accumulator (10),
wherein, in the same manner as steps iii. to iv., a reverse energy exchange and a reverse movement of the relevant caloric storage element (31) are carried out in steps vii. to viii., and steps v. to viii. are repeated until the desired temperature is reached in the relevant heat accumulator (11),
wherein, preferably, steps i. to iv. and steps v. to viii. are carried out simultaneously.

9. Motor vehicle (200) comprising at least one component (50, 51) to be tempered and a heat pump (100) according to one of claims 1 to 6 for the component (50, 51) to be tempered,
wherein, preferably, the component (50, 51) to be tempered can be tempered by means of a method according to claim 7 or claim 8.

## Revendications

1. Pompe à chaleur (100) comprenant :
- une pluralité d'accumulateurs de chaleur (10, 11, 12, 13) montés en cascade (20) les uns à la suite des autres ;
- une pluralité d'éléments de stockage calorique (30, 31, 32) qui sont positionnés en alternance en contact thermique avec respectivement l'un des accumulateurs de chaleur (10, 11, 12, 13) ; et
- au moins un moyen d'entraînement (40) destiné à faire alterner la position des éléments de stockage (30, 31, 32) entre les accumulateurs de chaleur (10, 11, 12, 13),
au moins l'un des accumulateurs de chaleur (10) étant en contact avec un composant (50, 51) afin de réguler la température de ce composant,
un dernier des accumulateurs de chaleur (13) de la cascade (20) étant en échange thermique avec un environnement (E),
**caractérisé en ce que**
au moins l'un des accumulateurs de chaleur (11, 12) forme un accumulateur intermédiaire (S) destiné à transférer de la chaleur entre un accumulateur de chaleur (10) en contact avec un composant (50) à réguler en température et le dernier accumulateur de chaleur (13), les éléments stockage calorique (30, 31, 32) comprennent au moins, de préférence exclusivement, l'un des matériaux suivants :
- un matériau thermoélectrique comprenant de préférence du bismuth, du tellure et, de manière particulièrement préférée, de l'antimoine ;
- un matériau électrocalorique, comprenant de préférence un terpolymère ou une céramique au plomb ;
- un matériau élasto-calorique, comprenant de préférence du nickel et/ou du titane, de préférence constitué d'un alliage nickel-titane ou d'un alliage nickel-titane contenant des éléments d'alliage supplémentaires tels que le cuivre, le vanadium et le cobalt ; et
- un matériau magnétocalorique, comprenant de préférence du gadolinium ou du lanthane.

2. Pompe à chaleur (100) selon la revendication 1, dans laquelle au moins l'un, de préférence tous, des éléments de stockage calorique (30, 31, 32) comprend un matériau élasto-calorique et, en cas de variation de température de l'élément de stockage concerné (30, 31, 32), le matériau élasto-calorique est déformable,
un mouvement d'entraînement, réalisé de préférence au moyen du moyen d'entraînement (40) associé à cet élément de stockage (30, 31, 32), servant à déplacer cet élément de stockage (30, 31, 32) entre les positions alternées en contact thermoconducteur avec les accumulateurs de chaleur associés (10, 11, 12, 13), conjointement avec la déformation du matériau élasto-calorique, est un mouvement circulaire ou linéaire, de préférence un mouvement elliptique.

3. Pompe à chaleur (100) selon la revendication 2, dans laquelle le matériau élasto-calorique d'au moins un, de préférence de tous les éléments de stockage (30, 31, 32), peut être soumis à la fois à une contrainte de compression et à une contrainte de traction au moyen du moyen d'entraînement (40) qui lui est associé.

4. Pompe à chaleur (100) selon l'une des revendications précédentes, dans laquelle un élément de séparation (41, 42, 43) est disposé entre deux accumulateurs de chaleur (10, 11, 12, 13) respectifs afin d'assurer leur séparation fluidique, un élément de stockage (30, 31, 32) pouvant être guidé à travers un élément de séparation (41, 42, 43) associé pour changer de position entre les accumulateurs de chaleur (10, 11, 12, 13).

5. Pompe à chaleur (100) selon l'une des revendications précédentes, dans laquelle au moins l'un des accumulateurs de chaleur (10, 11, 12, 13) est un canal d'une conduite en boucle (C) pour un fluide de refroidissement.

6. Pompe à chaleur (100) selon l'une des revendications précédentes, dans laquelle au moins deux des accumulateurs de chaleur (10, 11) sont agencés pour réguler la température d'au moins un composant (50, 51) chacun.

7. Procédé de fonctionnement d'une pompe à chaleur (100) selon l'une des revendications précédentes, comprenant les étapes suivantes :
i. lorsqu'une température dans le premier accumulateur de chaleur (10) s'écarte d'une température souhaitée, équilibrer la température entre le premier accumulateur de chaleur (10) et le premier élément de stockage calorique (30) en plaçant le premier élément de stockage calorique (30) en contact thermoconducteur avec le premier accumulateur de chaleur (10) ;
ii. au moyen d'un échange d'énergie externe entre le premier élément de stockage calorique (30) et une source d'énergie externe, faire varier la température du premier élément de stockage calorique (30) en s'éloignant de la température souhaitée de manière à augmenter une différence de température par rapport à la température dans le deuxième accumulateur de chaleur (11), et
au moyen du moyen d'entraînement associé (40), déplacer le premier élément de stockage calorifique (30) de sa position en contact thermique avec le premier accumulateur de chaleur (10) vers une position en contact thermique avec le deuxième accumulateur de chaleur (11) ;
iii. équilibrer la température entre le deuxième accumulateur de chaleur (11) et le premier élément de stockage calorique (30) en plaçant le premier élément de stockage calorique (30) en contact thermique avec le deuxième accumulateur de chaleur (11) ;
iv. au moyen d'un échange d'énergie externe, inverse par rapport à l'étape ii., entre le premier élément de stockage calorique (30) et une source d'énergie externe, modifier la température du premier élément de stockage calorique (30), et
au moyen du moyen d'entraînement associé (40), déplacer le premier élément de stockage calorique (30) de sa position en contact thermique avec le deuxième accumulateur de chaleur (11) vers une position en contact thermique avec le premier accumulateur de chaleur (10),
les étapes i) à iv) étant effectuées de manière similaire, de façon chevauchante dans le temps, de préférence simultanément, par l'au moins un autre élément de stockage thermique (31, 32) entre le deuxième accumulateur de chaleur (11) ou l'autre accumulateur de chaleur (12) et l'autre accumulateur de chaleur (12) ou le dernier accumulateur de chaleur (13),
les étapes du procédé étant répétées jusqu'à ce que la température souhaitée soit atteinte dans le premier accumulateur de chaleur (10).

8. Procédé selon la revendication 7, comprenant en outre les étapes suivantes :
v. lorsqu'une autre température dans au moins un autre des accumulateurs de chaleur (11) s'écarte d'une température souhaitée, équilibrer la température entre l'accumulateur de chaleur concerné (11) et un élément de stockage calorique (31) placé en contact thermique avec l'accumulateur de chaleur concerné (11) ;
vi. au moyen d'un échange d'énergie externe entre l'élément de stockage calorique concerné (31) et une source d'énergie externe, faire varier la température de cet élément de stockage calorique (31) en s'éloignant de la température souhaitée de telle sorte qu'une différence de température par rapport à la température dans le deuxième accumulateur de chaleur (11) soit augmentée, et
au moyen du moyen d'entraînement associé (40), déplacer l'élément de stockage calorique concerné (30) de sa position en contact thermique avec l'accumulateur de chaleur concerné (11) vers une position en contact thermique avec un autre accumulateur de chaleur (10),
un échange d'énergie inverse et un déplacement inverse de l'élément de stockage calorique concerné (31) étant effectués de la même manière que les étapes iii. à iv. dans les étapes vii. à viii., et les étapes v. à viii. étant répétées jusqu'à ce que la température souhaitée soit atteinte dans l'accumulateur de chaleur concerné (11),
les étapes i. à iv. et les étapes v. à viii. étant de préférence exécutées de manière à se chevaucher dans le temps.

9. Véhicule automobile (200) comprenant au moins un composant (50, 51) à réguler en température et une pompe à chaleur (100) selon l'une des revendications 1 à 6 pour le composant (50, 51) à réguler en température,
le composant à réguler thermiquement (50, 51) pouvant de préférence être régulé thermiquement au moyen d'un procédé selon la revendication 7 ou la revendication 8.
